Europäisches Patentamt

European Patent Office

Office européen des brevets

(11) Publication number: **0 244 931**
**A2**

# EUROPEAN PATENT APPLICATION

(21) Application number: **87301861.8**

(22) Date of filing: **04.03.87**

(51) Int. Cl.⁴: **B60R 25/04**

The title of the invention has been amended (Guidelines for Examination in the EPO, A-III, 7.3).

(30) Priority: **04.03.86 GB 8605314**

(43) Date of publication of application:
**11.11.87 Bulletin 87/46**

(84) Designated Contracting States:
**DE FR GB IT NL SE**

(71) Applicant: **Smith, Ian Dennis Cecil**
**Shanagarry**
**Midleton County Cork(IE)**

(72) Inventor: **Smith, Ian Dennis Cecil**
**Shanagarry**
**Midleton County Cork(IE)**

(74) Representative: **Adkins, Michael et al**
**Withers & Rogers 4 Dyer's Buildings**
**Holborn London, EC1N 2JT(GB)**

(54) **Disabling system for a vehicle ignition circuit.**

(57) This invention relates to a disabling system for a vehicle having an electrical ignition circuit. Such ignition circuits have an open-circuit mode in which the vehicle is de-energized, and a closed circuit mode in which the vehicle can be driven by its engine. The disabling system according to the invention when in the vehicle is operative to move the electrical ignition circuit to the open circuit mode only after the circuit has been in a closed circuit mode for a pre-determined time interval. Thus the vehicle engine can be powered, but then the engine cuts out, thereby preventing a thief from moving the vehicle any great distance. In a preferred embodiment the ignition circuit is coupled to the fuel gauge such that the apparent cuase for the engine cut out is lack of fuel.

EP 0 244 931 A2

## DISABLING SYSTEM

This invention relates to a disabling system for a vehicle having an electrical ignition circuit. Such ignition circuits have an open-circuit mode in which the vehicle is de-energised, and a closed-circuit mode in which the vehicle, be it petrol, diesel or liquid propane gas powered, can be driven by its engine. Traditionally the electrical ignition circuit has at least one circuit element movable between an open-circuit and closed-circuit condition, as by a manually-operated ignition key, movement to the closed-circuit condition being a requirement, often the only requirement, to place the ignition circuit into the closed-circuit mode.

However, spare or replacement ignition keys are readily obtained by unauthorised persons; and even if not readily available a determined and knowledgeable thief can "hot-wire" a vehicle to put the ignition circuit into the closed-circuit mode by inter-connecting the necessary circuit wires. Thus the need for an effective vehicle disabling system linked to the electrical ignition circuit has long been recognised. Such a disabling system should be easy to use and effective to prevent unauthorised persons from driving the vehicle away.

There have been a number of proposals for vehicle disabling systems based on a circuit element additional to that operated by the ignition key, and which also needs to be placed in the closed-circuit condition; for security often this additional circuit element is hidden, but when fitted as a standard item by the vehicle assembler its whereabouts soon becomes known, and when fitted remote from the driving position it is often too troublesome and so not disabled when the driver leaves the vehicle or if it is so disabled an observant thief can identify its likely location. Furthermore, since the disabling systems of which we are aware prevent the electrical ignition circuit moving into the closed-circuit mode in which vehicle engine can be re-started, even though the vehicle may clearly only just have been driven to its present parking space, the thief is immediately alerted to the likely presence of a disabling system and may have time to locate it before the vehicle owner returns.

An object of the invention is to provide an improved disabling system.

According to one aspect of my invention there is provided a disabling system for a vehicle having an electrical ignition circuit with an open-circuit mode and a closed-circuit mode, characterized in that the disabling system comprises a circuit disabling system operative to move the electrical ignition circuit to the open-circuit mode only after said circuit has been in the closed-circuit mode for a pre-determined time interval.

In the above aspect, circuit verification means may be included to inhibit the circuit disabling system. Such verification means is preferably operative to inhibit the circuit disabling system only if activated within said pre-determined time interval.

Thus with disabling system of the invention in use, the vehicle engine can be powered, but then cuts out. Depending upon the location at which the vehicle is parked, starting of the engine, or continued such attempts to start the engine, can act as an audible warning to the owner of attempted vehicle theft.

Preferably the pre-determined time interval is set by timing means, the timing means being operative to cause a signal to be emitted after said pre-determined time interval. In such a case the signal may be arranged to effect transfer of the electrical ignition circuit from the closed-circuit to the open-circuit mode and additionally effect actuation of an audible warning device.

According to another aspect of the invention I provide a disabling system for a vehicle having an electrical ignition circuit with an open circuit mode and a closed circuit mode, characterised in that the disabling system is operative to move the electrical ignition circuit to the open circuit only after the circuit has been in the closed circuit mode for a predetermined time interval, and circuit verification means is provided operable to inhibit the circuit disabling system, said circuit verification means including sensor means which, in use, is touched manually to operate the circuit verification means

According to a further aspect of my invention in a vehicle having an electrical ignition system, I provide a vehicle disabling system comprising an electrical ignition circuit having an open circuit mode and a closed circuit mode and having at least one circuit element movable between an ignition mode and a non-ignition mode, manually-operable means to move the said at least one circuit element between said modes, timing means operative to emit a signal at a pre-determined interval after said manually-operable means has moved said at least one circuit element into the ignition mode, and circuit verification means responsive to said signal, said circuit verification means acting to move the electrical ignition circuit to the open-circuit mode upon receipt of said signal unless said circuit verification means has been manually de-activated during said pre-determined interval.

Preferably the electrical ignition circuit, in use, is electrically coupled to the fuel gauge, transfer to the open-circuit mode effecting a zero-fuel gauge indication. In such a case the fuel gauge preferably registers zero fuel until after the expiry of the time interval. As mentioned above, the signal may be arranged to effect transfer of the electrical ignition circuit from the closed-circuit to the open-circuit mode and additionally effect actuation of an audible warning device.

Preferably the sensor means comprises two sensor members which may be spaced apart further than any two fingers on a driver's hand. The sensor members may conveniently comprise two existing vehicle electrically conductive parts, which can be touched simultaneously by a finger on each hand.

The sensor member may be touch-sensitive.

An advantage of our disabling system is that the sensor members can be individually positioned around the vehicle, and can in fact be any two (or more) existing metal parts or objects in the vehicle, instead of specially fitted parts.

In use therefore, when the vehicle ignition is switched on, the control circuit of the disabling system is activated, permitting the engine to start; but after the predetermined interval -conveniently seven seconds, if the two sensor members have not already been touched, the engine will cut-out with the fuel gauge registering empty. No matter how ofen a thief attempts to re-start the engine, this cylcle will re-occur, so frustrating the intending thief whilst leading him to believe that the vehicle is out of fuel. However, an authorised driver, after starting the engine, will within the e.g. seven seconds, touch the sensor members so re-activating the arrangement into a re-set cycle so that the engine can be powered and the vehicle can be driven as normal.

Preferably attempts to re-start the engine will be abortive if made within a preset period, preferably a preset period of above fifteen seconds. Thus once the disabling system has been operated to move the electrical ignition circuit to the open-circuit mode, the disabling system acts to hold the electrical ignition circuit in the open-circuit mode for this preset period.

It will be understood that the disabling system does not seek to prevent a thief from entering the vehicle, as crime observations indicate that a determined and knowledgeable thief can enter a vehicle quite quickly even without a door key, and that much damage may be caused to the vehicle by repeated unauthorised entry attempts by less-knowledgeable "joy-riders".

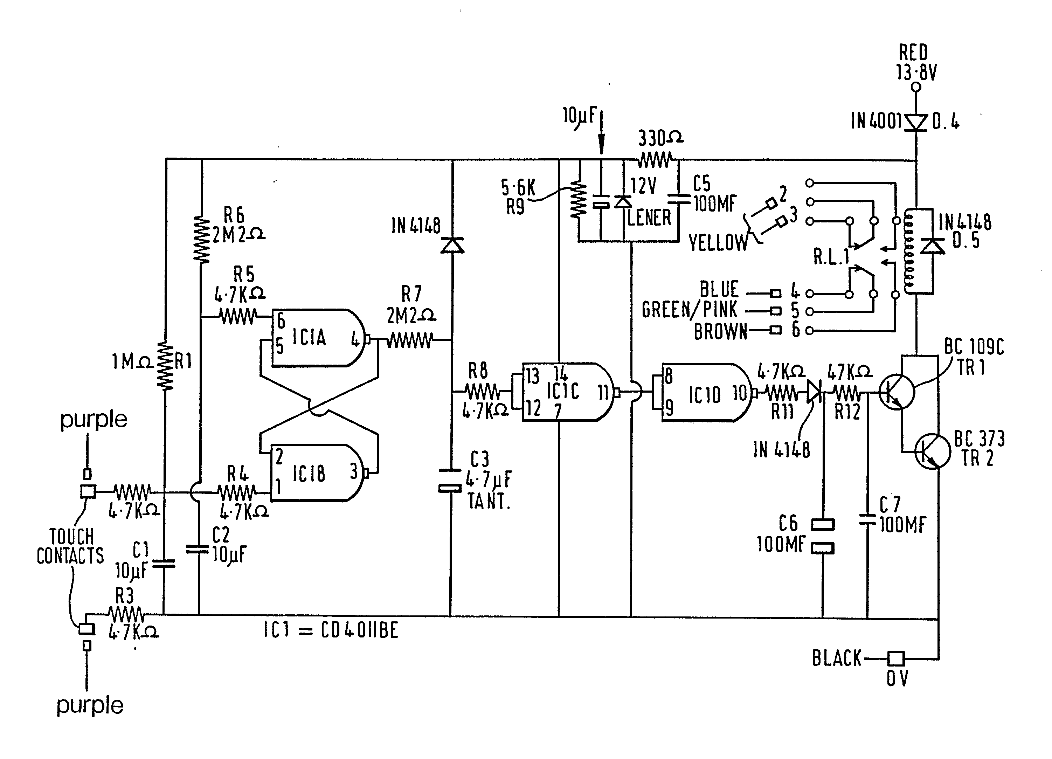

One embodiment of suitable circuitry is shown in the single figure of drawings which is a - schematic diagram, in which the wiring loom codes are as follows:

PURPLE : Connection to code breaker sensor points.
YELLOW : Connection to fuel gauge feed wire.
RED : Connection to fuse governing in the supply to the ignition system.
BLACK : Connection to earth.
GREEN : Connection to earth for petrol and LPG vehicles with standard points ignition OR Connection to wire connecting electronic ignition unit to coil for petrol and LPG vehicles with electronic ignition OR Connection to wire connection the ignition switch to the injector pump for diesel vehicles.
BLUE : Connection to the wire connecting the electronic ignition to the coil for petrol and LPG vehicles with electronic ignition OR Connection to the wire connecting the ignition switch the injector pump for diesel vehicles.
BROWN : Connection to the distributor for petrol and LPG vehicles with standard points ignition.

With reference to the single figure of drawings the ICI comprises 4 Inverters with pins 5-I-I2 and 9 being the inputs.

Power is supplied to the circuit via the Red Wire, Polarity Protection Diode D4 and to the logic circuitry via stabilising circuitry 330 ᴧ and a Zener to the pin I4 and ground to pin 7.

A. Assuming Power is applied and the touch contacts are NOT touched:-
Pin 6 is set High by R6 and R5.
Pin I is also High - Therefore Pin 3 will be Low; Pin 5 Low and Pin 4 High. The output from this stage is fed via R7,R8 to Pins I3 and I2.
The time constant of R7 and C3 sets the time delay before the Relay is activated. When Pin 4 goes high, C3 (4.7 uF) rises slowly until Pins I2 and I3 reach threshold level to produce inversion on Pin II (Low). Low is applied to Pins 8 and 9 and I5 is again inverted to produce High on I0, thus biasing 'On' TRI, TR2 and driving the Relay.
TRI and TR2 are biased to give High gain and fast action.

B. Assuming Power is applied and the touch contacts ARE touch:-
Pin I will be taken Low, giving High on 3 and on 5. High on 5 produces Low on 4. With Low on 4 there is no charging of C3 and Pins I2 and I3 remain Low. II, 8, 9 go High and I0 low, thereby supplying no base bias to transistors and holding Relay Off.

C. Assuming that the Contacts are touched BEFORE C3 charges sufficiently, i.e. 7 seconds, the Relay won't Activate.

D. Having activated the Relay, the power must be removed for 2O seconds to permit C3 to discharge through DI. Less than 2O seconds will allow the remaining charge on C3 to produce spurious action.

The fitter can determine the best locations for the connections to be made in the vehicle in accordance with the above codes the control black box being located out of sight, e.g. under the dashboard or a seat, and secured with cable ties. The loom is connected to the control black box by way of the 9-pn self-locking plug,and the loom is run to the front of vehicle via the dashboard, and the wires of the loom directed to the locations where the various connections are to be made. In this embodiment when the two sensor points have been selected - usually in discussion with the vehicle owner, and comprising for instance two existing metal parts or objects; or one metal part or object and one of the sensor screws; or both sensor screws, these sensor parts or code breaker points being well insulated form the metal body of the vehicle, the two "purple" wires are connected, one to each respective sensor.

The existing fuel gauge wire is cut, and the two "yellow" wires are formed one to each respective cut end. The fuse governing the supply to the ignition system is then removed,and the "red" wire connected to the output side of the fuse connection; the fuse is kept separate.

The "black" wire is then connected to earth. For petrol and LPG powered vehicles with standard points ignition, the "blue" wire is cut away and its loose end insulated, the "green" wire is connected to earth, and the "brown" wire is connected to the distributor at the point where the wire from the ignition coil is connected, but without removing that wire. For petrol and LPG powered vehicles with electronic ignition, the wire connecting the electronic ignition unit to the coil is cut, the "green" wire is connected to one of the cut ends and the "blue" wire is cut away and the loose end insulated. For diesel-powered vehicles, the wire connecting the ignition switch to the injection pump is cut, the "green" wire is connected to one of the cut of the cut ends and the "blue" wire to the other, the "brown" wire is then cut away and the loose end insulated.

The connections are as usual well insulated, the earth connections are to bekept free of rust or paint, and the sensors are similarly to be kept free of paint and well insulated from the vehicle body.

The fuse, which as above has been kept separate, is now replaced.

Alternative embodiments will provide a touch-sense system for vehicles with other than a l2V negative earth supply;
and for diesel powered vehicles with a manual engine cut-off.

When being tested, the engine is started and "revved" as usual. After about seven seconds, the engine will stop revving and the fuel gauge indicator, if it has already moved, will return to "Empty". There will then be a pre-determined delay, conveniently of twenty seconds, for the system to be reset. When in normal use, the engine is started and revved as usual, but before seven seconds have elapsed the two sensor points have been touched for about a second, the engine will function as normal and continue to run. In this embodiment , the sensor points are positioned so that they can only be reached by a finger of each hand; but in an alternative embodiment they can be positioned to be touched by two fingers on one hand. Preferably the sensors are touch-sensitive, usually of the type responsive only to moistened fingers.

In alternative embodiments, other known types of circuit makers/breakers can be used.

The system can permit the fuel gauge to commence registering as normal; but preferably either the fuel gauge wiring has an inbuilt delay so that in normal use the fuel level gauge does not begin to register e.g. until after ten seconds; or the fuel gauge circuit is interconnected to the disabling system so that the fuel gauge circuit is only completed after the sensor points are connectly touched, whereupon the fuel level gauge can begin to register.

**Claims**

1. A Disabling system for a vehicle having an electrical ignition circuit with an open circuit mode and a closed circuit mode, characterized in that the disabling system is operative to move the elctrical ignition circuit to the open circuit mode only after the circuit has been in the closed circuit mode for a predetermined time interval, and circuit verification means is provided operable to inhibit the circuit disabling system,the circuit verification means including sensor means which, in use, is touched manually to operate the circuit verification means.

2. A disabling system according to claim I characterized in that the circuit verification means is operative to inhibited the circuit disabling system only if actuated with said pre-determined time interval.

3. A disabling system according to either of the preceding claims characterized in that the electrical ignition circuit, in use, is electrically coupled to the fuel gauge, transfer to the open-circuit mode effecting a zero-fuel indication.

4. A disabling system according to claim 3 characerized in that the fuel gauge registers zero fuel until after the expiry of said time interval.

5. A disabling system according to any one of the preceding claims characterized in that the pre-determined time interval is set by timing means, the timing means being operative to cause a signal to be emitted after said pre-determined time interval.

6. A disabling system according to claim 5 characterized in that the signal is arranged to effect transfer of the electrical ignition circuit from the closed-circuit to the open-circuit mode and additionally effect actuation of an audible warning device.

7. A disabling system accordig to any one of claims 2 to 7 characterized in that the sensor means comprises two two sensor members.

8. A disabling system according to claim 7 characterized in that the sensor members are spaced apart, in use, further than any two fingers on a driver's hand.

9. A disabling system according to any one of claims 7 or 8 characterized in that the sensor members comprise two existing vehicle electrically conductive parts.

IO. A disabling system according to any one of the preceding claims charactized in that the pre-determined time interval is between five and ten seconds.

II. A disabling system according to any one of the preceding claims characterized in that the pre-determined time interval is between five and ten seconds.

II. A disabling system according to any one of the preceding claims characterized in that after the disabling system has been operative to move the electrical ignition circuit to the open-circuit mode, the disabling system acts to hold the electrical ignition circuit in the open-circuit mode for a preset period.

I2. A disabling system according to claim II wherein the preset period is above fifteen seconds.